# EUROPÄISCHE PATENTSCHRIFT

(11) **EP 2 103 080 B1**
(45) Veröffentlichungstag und Bekanntmachung des Hinweises auf die Patenterteilung: **12.02.2020**
(21) Anmeldenummer: 07856692.4
(22) Anmeldetag: 13.12.2007
(51) Int. Cl.: H04L 29/06, H04W 12/06, H04L 12/22

(54) **ÜBERPRÜFUNG VON AUTHENTISIERUNGSFUNKTIONEN**
CHECKING OF AUTHENTICATION FUNCTIONS
VÉRIFICATION DE FONCTIONS D'AUTHENTIFICATION

(30) Priorität: 20.12.2006 DE 102006060967
(43) Veröffentlichungstag der Anmeldung: 23.09.2009
(73) Patentinhaber: Vodafone Holding GmbH, 40213 Düsseldorf (DE)
(72) Erfinder: RÜDINGER, Jens, 40233 Düsseldorf (DE)
(74) Vertreter: Ring & Weisbrodt
(86) Internationale Anmeldenummer: PCT/EP2007/010946
(87) Internationale Veröffentlichungsnummer: WO 2008/083813

(56) Entgegenhaltungen:
- EP-A- 1 005 244
- EP-A- 1 414 212

## Beschreibung

Die vorliegende Erfindung betrifft ein Verfahren zur Überprüfung von Authentisierungsfunktionen einer Authentisierung zwischen einem Mobilfunknetz, vorzugsweise einem Mobilfunknetz gemäß einem UMTS-Funknetzstandard, und einem in dem Mobilfunknetz betreibbaren mobilen Endgerät und/oder einem einem in dem Mobilfunknetz betreibbaren mobilen Endgerät einen authentifizierenden Zugang zu dem Mobilfunknetz ermöglichenden Mobilfunkteilnehmer-Identifikations-Modul, wobei das mobile Endgerät und/oder das Mobilfunkteilnehmer-Identifikations-Modul im Rahmen der Authentisierung eine Zufallszahl und einen eine Sequenznummer, einen Informationsparameter und einen Authentifizierungskode umfassenden Authentifikationstoken eines Authentisierungsvektors empfängt, unter Nutzung des Mobilfunkteilnehmer-Identifikations-Moduls den Authentifikations-token verifiziert, einen erwarteten Authentifizierungskode aus einem seitens des Mobilfunkteilnehmer-Identifikations-Moduls gespeicherten Schlüsselwert, der Zufallzahl, der Sequenznummer und dem Informationsparameter generiert und mit dem Authentifizierungskode des Authentifikationstoken vergleicht und in Abhängigkeit des Ergebnisses des Vergleichs des generierten erwarteten Authentifizierungskodes mit dem empfangenen Authentifizierungskode des Authentifikationstoken wenigstens eine Antwortnachricht an das Mobilfunknetz überträgt.

Gegenstand der vorliegenden Erfindung ist ferner ein Verfahren zur Überprüfung von Authentisierungsfunktionen einer Authentisierung zwischen einem Mobilfunknetz, vorzugsweise einem Mobilfunknetz gemäß einem UMTS-Funknetzstandard, und einem in dem Mobilfunknetz betreibbaren mobilen Endgerät und/oder einem einem in dem Mobilfunknetz betreibbaren mobilen Endgerät einen authentifizierenden Zugang zu dem Mobilfunknetz ermöglichenden Mobilfunkteilnehmer-Identifikations-Modul, wobei das Mobilfunknetz im Rahmen der Authentisierung dem mobilen Endgerät eine Zufallszahl und einen eine Sequenznummer, einen Informationsparameter und einen Authentifizierungskode umfassenden Authentifikationstoken eines Authentisierungsvektors überträgt, auf den Authentifikationstoken wenigstens eine Antwortnachricht empfängt, unter Nutzung eines seitens des Mobilfunknetzes gespeicherten Schlüsselwertes eine erwartete Antwortnachricht generiert, die generierte erwarteten Antwortnachricht mit der empfangenen Antwortnachricht vergleicht und in Abhängigkeit des Ergebnisses des Vergleichs der Zugang des mobilen Endgerätes zum Mobilfunknetz authentifiziert wird.

Darüber hinaus betrifft die vorliegende Erfindung ein mobiles Endgerät, ein Mobilfunkteilnehmer-Identifikations-Modul und/oder ein Mobilfunknetz, welche jeweils zur Ausführung eines erfindungsgemäßen Verfahrens ausgebildet sind.

Im Stand der Technik sind zahlreiche Verfahren und Systeme bekannt, die zur Authentisierung, Authentifizierung und/oder Autorisierung von Parteien untereinander zum Einsatz kommen. Im Rahmen der Authentisierung erfolgt dabei der Nachweis der Identität einer Partei, welche im Rahmen einer Authentifizierung beziehungsweise Authentifikation anhand eines bestimmten Merkmals überprüft wird. Dementsprechend sind bei einer Identitätsüberprüfung ein sich authentisierender Teilnehmer und ein diesen authentifizierender Teilnehmer beteiligt. Im Anschluss an eine erfolgreiche Authentisierung, kann dann eine Autorisierung erfolgen.

Anwendung finden derartige Verfahren und Systeme insbesondere im Bereich von zellularen Mobilfunknetzen, beispielsweise im Zusammenhang mit einem mobilen Endgerät einen Zugriff in beziehungsweise auf das Mobilfunknetz ermöglichenden Mobilfunkteilnehmer-Identifikations-Modulen, sogenannten SIM- oder USIM-Karten (SIM: Subscriber Identity Module; USIM: Universal SIM) welche dazu in der Regel in in Mobilfunknetzen betreibbare mobile Endgeräte eingesetzt werden. Neben einer seitens entsprechender SIM-Karten gegebenen kartenspezifischen und in der Regel eindeutigen Kennung erfordert ein Zugriff auf beziehungsweise in das Mobilfunknetz zusätzlich die Eingabe einer persönlichen Identifikations-Nummer beziehungsweise eines numerischen Zugangscodes, einer sogenannten PIN (PIN: Personal Identity Number) seitens eines die SIM-Karte nutzenden mobilen Endgerätes durch den Nutzer des mobilen Endgerätes.

Die Authentisierung zwischen einem Mobilfunknetz, insbesondere einem Mobilfunknetz gemäß einem UMTS-Funknetzstandard (UMTS: Universal Mobile Telekommunikations System) und einem in dem Mobilfunknetz betreibbaren mobilen Endgerät und/oder einem in dem Mobilfunknetz betreibbaren mobilen Endgerät einen authentifizierenden Zugang zu dem Mobilfunknetz ermöglichenden Mobilfunkteilnehmer-Identifikations-Modul, insbesondere einer sogenannten USIM (USIM: Universal Subscriber Identity Modul) ist im Stand der Technik allgemein bekannt, beispielsweise aus dem Dokument 3G TS 33.102 der 3GPP (3^{rd} Generation Partnership Projekt).

EP1005244 offenbart ein Challenge-Response Authentifizierungsverfahren wobei die Challenge Verifizierungsinformationen enthält zur Verifizierung ihrer Quelle.

Der Erfindung liegt in Anbetracht dieses Standes der Technik die Aufgabe zugrunde, auf einfache und kostengünstige Art und Weise eine Überprüfung von Authentisierungsfunktionen der Authentisierung zu ermöglichen, insbesondere hinsichtlich eines mobilfunknetzseitigen Verhaltens bei durch Störungen und/oder Manipulationen hervorgerufenen Fehlern beziehungsweise Abweichungen in der Authentisierung.

Die Erfindung betrifft ein Verfahren, ein Endgerät und ein USIM nach den Ansprüchen 1, 7 und 8.

Weitere Ausführungen sind den abhängigen Ansprüche zu entnehmen.

Weitere Einzelheiten, Merkmale und Vorteile der Erfindung werden nachfolgend anhand des in der Figur der Zeichnung dargestellten Ausführungsbeispiels näher erläutert. Dabei zeigt:

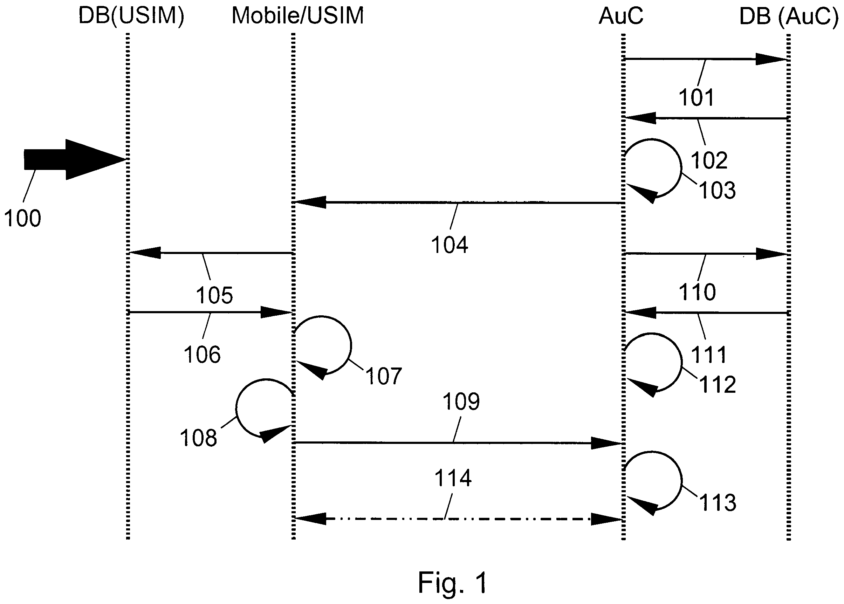

- Fig. 1: in einer schematischen Prinzipdarstellung ein Ausführungsbeispiel einer erfindungsgemäßen Überprüfung von Authentisierungsfunktionen einer Authentisierung zwischen einem Mobilfunknetz und einem Mobilfunkteilnehmer-Identifikations-Modul eines in dem Mobilfunknetz betreibbaren mobilen Endgerätes.

Die in Fig. 1 dargestellte Authentisierung zwischen einem Mobilfunknetz und einem darin betreibbaren mobilen Endgerät beziehungsweise dem von diesem genutzten Mobilfunkteilnehmer-Identifikations-Modul erfolgt vorliegend basierend auf den aus dem Dokument 3G TS 33.102 der 3GPP bekannten Standards.

Im Rahmen der Authentisierung zwischen einem Mobilfunknetz, vorliegend einem Mobilfunknetz gemäß einem UMTS-Funknetzstandard, und einem in dem Mobilfunknetz betreibbaren mobilen Endgerät (Mobile) welches hierzu ein Mobilfunkteilnehmer-Identifikations-Modul (USIM) aufweist, wird dem mobilen Endgerät (Mobile/USIM) von dem Mobilfunknetz, vorliegend von dem sogenannten Authentication Center (AuC) in dem mit 104 gekennzeichneten Verfahrensschritt ein Authentisierungsvektor (AV) übertragen, der unter anderem eine Zufallszahl (RAND) und einen eine Sequenznummer (SQN), einen Informationsparameter (AMF) und einen Authentifizierungskode (MAC) umfassenden Authentifikationstoken (AUTN) umfasst (AUTN= SQN, AMF, MAC). Der in dem Verfahrensschritt 104 von dem Mobilfunknetz (AuC) übertragene Authentisierungsvektor (AV) umfasst dabei neben der Zufallszahl (RAND) und dem Authentifikationstoken (AUTN) eine im weiteren noch näher zu erläuternde generierte erwartete Antwortnachricht (XRES), Verschlüsslungswerte (CK) sowie Datenintegritätswerte IK (AV=RAND, XRES, CK, IK, AUTN). Die Bestandteile des Authentisierungsvektors (AV), also die Zufallszahl (RAND), der Authentifikationstoken (AUTN), bestehend aus einer Sequenznummer (SQN), einem Informationsparameter (AMF) und einem Authentifizierungskode (MAC), sowie die generierte erwartete Antwortnachricht (XRES), der Verschlüsslungswert (CK) und der Datenintegritätswert (IK) sind dabei zuvor seitens des Authentication Center (AuC) des Mobilfunknetzes unter Nutzung einer dem Authentication Center (AuC) zugeordneten Datenbank (DB(AuC)) durch die in Fig. 1 mit den Verfahrensschritten 101, 102 und 103 gekennzeichneten Verfahrensschritte aus der Datenbank (DB(AuC)) abgerufen (Verfahrensschritt 101: Anfrage des Authentication Center (AuC) an die Datenbank (DB(AuC)); Verfahrensschritt 102: Antwort der Datenbank (DB(AuC)) an das Authentication Center (AuC)) und anschließend seitens des Authentication Center (AuC) des Mobilfunknetzes generiert (Verfahrensschritt 103).

Seitens des mobilen Endgerätes (Mobile) beziehungsweise dem von diesen genutzten Mobilfunkteilnehmer-Identifikations-Modul (USIM) wird der Authentifikationstoken (AUTN) des mit Verfahrensschritt 104 empfangenden Authentisierungsvektors (AV) verifiziert, wobei ein erwarteter Authentizierungscode (IMAC) aus einem seitens einer Datenbank (DB(USIM)) des Mobilfunkteilnehmer-Identifikations-Modul (USIM) gespeicherten Schlüsselwertes (K), der mit dem Authentisierungsvektor (AV) empfangenden Zufallszahl (RAND), der Sequenznummer (SQN) und dem Informationsparameter (AMF) des Authentifkationstoken (AUTN) des mit Verfahrensschritt 104 empfangenden Authentisierungsvektors (AV) generiert wird. Die Abfrage des Schlüsselwertes (K) aus der Datenbank (DB(USIM)) des Mobilfunkteilnehmer-Identifikations-Moduls (USIM) ist in Fig. 1 symbolisch durch die mit 105 und 106 gekennzeichnete Verfahrensschritte dargestellt (Verfahrensschritt 105: Abfrage der Datenbank DB(USIM); Verfahrensschritt 106: Antwort der Datenbank DB(USIM)). Die Generierung des erwarteten Authentifzierungscodes (XMAC) ist in Fig. 1 durch den mit 107 gekennzeichneten Verfahrensschritt seitens des mobilen Endgerätes (Mobile) beziehungsweise des Mobilfunkteilnehmer-Identifikations-Modul (USIM) dargestellt. Der so generierte erwartete Authentifizierungscode (XMAC) wird anschließend seitens des mobilen Endgerätes (Mobile) beziehungsweise des Mobilfunkteilnehmer-Identifikations-Modul (USIM) mit dem Authentifizierungscode (MAC) des Authentifikationstoken (AUTN) des in Verfahrensschritt 104 seitens des mobilen Endgerätes (Mobile) beziehungsweise des Mobilfunkteilnehmer-Identifikations-Modul (USIM) empfangenden Authentisierungsvektors (AV) verglichen. In Fig. 1 ist der Vergleich durch den mit 108 gekennzeichneten Verfahrensschritt symbolisch dargestellt.

In Abhängigkeit des Ergebnisses des in Verfahrensschritt 108 durchgeführten Vergleichs des generierten erwarteten Authentifizierungscodes (XMAC) mit dem vom Mobilfunknetz (AuC) übertragenen Authentifzierungscode (MAC) des Authentifikationstoken (AUTN) wird von dem mobilen Endgerät (Mobile/USIM) in dem mit 109 gekennzeichneten Verfahrensschritt eine Antwortnachricht (RES, AUTS) an das Mobilfunknetz (AuC) übertragen.

Seitens des Mobilfunknetzes, vorliegend seitens des Authentication Center (AuC) ist zuvor in den mit 110, 111 und 112 gekennzeichneten Verfahrensschritten unter Nutzung eines seitens der Datenbank (DB(AuC)) des Authentication Center (AuC) gespeicherten Schlüsselwertes (K) eine erwartete Antwortnachricht (XRES) generiert worden (Verfahrensschritt 110: Abfrage des Schlüsselwertes (K) aus der Datenbank DB(AuC); Verfahrensschritt 111: Antwort Datenbank DB(AuC)); Verfahrensschritt 112: Generierung der erwarteten Antwortnachricht (XRES)). In dem mit 113 gekennzeichneten Verfahrensschritt wird die in dem Verfahrensschritt 109 von dem mobilen Endgerät (Mobile/USIM) an das Mobilfunknetz (AuC) übertragene Antwortnachricht (RES, AUTS) mit der generierten erwarteten Antwortnachricht verglichen (Verfahrensschritt 113).

In Abhängigkeit des Ergebnisses des in Verfahrensschritt 113 durchgeführten Vergleichs der in Verfahrensschritt 112 generierten Antwortnachricht (XRES) mit der von dem mobilen Endgerät (Mobile/USIM) in Verfahrensschritt 109 an das Mobilfunknetz (AuC) übertragenen Antwortnachricht (RES, AUTS) wird der Zugang des mobilen Endgerätes (Mobile/USIM) zum Mobilfunknetz authentifiziert (Verfahrensschritt 114) und eine entsprechende Kommunikation zwischen dem mobilen Endgerät (Mobile/USIM) und dem Mobilfunknetz realisiert, wie in Fig. 1 symbolisch anhand des mit 114 gekennzeichneten strichpunktierten Doppelpfeils dargestellt.

Die in Verfahrensschritt 108 vom mobilen Endgerät (Mobile/USIM) generierte und in Verfahrensschritt 109 an das Mobilfunknetz (AuC) übertragene Antwortnachricht (RES, AUTS) wird vorliegend über die in Fig. 1 symbolisch durch den mit dem Bezugszeichen 100 gekennzeichneten Pfeil dargestellte Administrierbarkeit der Datenbank (DB(USIM)) des Mobilfunkteilnehmer-Identifikations-Moduls (USIM) des mobilen Endgerätes (Mobile) mit veränderbar verwalteten Parametern erzeugt. Das Ergebnis des Vergleichs der in Verfahrensschritt 112 generierten erwarteten Antwortnachricht (XRES) mit der von dem mobilen Endgerät (Mobile) übertragenen Antwortnachricht (RES, AUTS) wird dabei im Rahmen der Authentisierung (Verfahrensschritt 114) seitens des mobilen Endgerätes (Mobile), des von dem mobilen Endgerätes (Mobile) genutzten Mobilfunkteilnehmer-Identifikations-Moduls (USIM) und/oder seitens des Mobilfunknetzes, vorliegend seitens des Authentication Center (AuC) in Beziehung zu den in der Datenbank (DB(USIM)) des Mobilfunkteilnehmer-Identifikations-Moduls (USIM) veränderbar verwalteten Parameter gesetzt, um eine Überprüfung von Authentisierungsfunktionen der Authentisierung zwischen dem mobilen Endgerät (Mobile/USIM) und dem Mobilfunknetz (AuC) zu ermöglichen. Die Beziehung zwischen den Parametern zur Erzeugung der an das Mobilfunknetz übertragenen Antwortnachricht (RES, AUTS) und dem Ergebnis des Vergleichs der generierten erwarteten Antwortnachricht (XRES) ermöglicht dabei eine Feststellung des Authentisierungsverhaltens des Mobilfunknetzes, insbesondere hinsichtlich Manipulationen und/oder Fehlern in der Authentisierung. Die Nutzung von ebenfalls über die Administrationsschnittschnelle 100 seitens der Datenbank (DB(USIM)) des Mobilfunkteilnehmer-Identifikations-Moduls (USIM) veränderbar verwalteten Parametern in Form von Verschlüsselungswerten (CK) und/oder Datenintegritätswerten (IK) erlaubt darüber hinaus Rückschlüsse über mobilfunknetzseitiges Fehlverhalten in der Verschlüsselung und/oder der Datenintegrität zu Überprüfungszwecken zu ermitteln.

Das in der Figur der Zeichnung dargestellte Ausführungsbeispiel diente lediglich der Erläuterung der Erfindung und ist für diese nicht beschränkend.

### Bezugszeichenliste:

- 100: Administrierbarkeit Datenbank (DB(USIM))/Schnittstelle
- 101: Verfahrensschritt
- 102: Verfahrensschritt
- 103: Verfahrensschritt
- 104: Verfahrensschritt
- 105: Verfahrensschritt
- 106: Verfahrensschritt
- 107: Verfahrensschritt
- 108: Verfahrensschritt
- 109: Verfahrensschritt
- 110: Verfahrensschritt
- 111: Verfahrensschritt
- 112: Verfahrensschritt
- 113: Verfahrensschritt
- 114: Verfahrensschritt
- AuC: Authentication Center (Mobilfunknetz)
- DB(AuC): Datenbank des Authentication Center (AuC)
- Mobile: mobiles Endgerät
- USIM: Mobilfunkteilnehmer-Identifikations-Modul
- DB(USIM): Datenbank des Mobilfunkteilnehmer-Identifikations-Modul (USIM)

## Patentansprüche

1. Verfahren zur Überprüfung von Authentifizierungsfunktionen einer Authentifizierung zwischen einem Mobilfunknetz und einem in dem Mobilfunknetz betreibbaren mobilen Endgerät und/oder einem einem in dem Mobilfunknetz betreibbaren mobilen Endgerät einen authentifizierten Zugang zu dem Mobilfunknetz ermöglichenden Mobilfunkteilnehmer-Identifikations-Modul, USIM, umfassend die seitens des mobilen Endgeräts und/oder des Mobilfunkteilnehmer-Identifikations-Moduls, USIM, ausgeführten Schritte:
Empfangen (104), im Rahmen der Authentifizierung, eines Authentifizierungsvektors, AV, umfassend eine Zufallszahl, RAND, eine erwartete Antwortnachricht, XRES, Verschlüsselungswerte, CK, Datenintegritätswerte, IK, und einen Authentifizierungstoken, AUTN, wobei der Authentifizierungstoken, AUTN, eine Sequenznummer, SQN, einen Informationsparameter, AMF, und einen Authentifizierungskode, MAC, umfasst,
Verifizieren, unter Nutzung des Mobilfunkteilnehmer-Identifikations-Moduls, USIM, des Authentifizierungstokens, AUTN,
Generieren (107) eines erwarteten Authentifizierungskodes, XMAC, aus einem seitens des Mobilfunkteilnehmer-Identifikations-Moduls, USIMs, gespeicherten Schlüsselwerts, K, der Zufallszahl, RAND, der Sequenznummer, SQN, und dem Informationsparameter, AMF,
Vergleichen (108) des generierten erwarteten Authentifizierungskodes, XMAC, mit dem Authentifizierungskode, MAC, des Authentifizierungstokens, AUTN, und
Erzeugen und Übertragen (109) wenigstens einer Antwortnachricht, RES, AUTS, an das Mobilfunknetz in Abhängigkeit des Ergebnisses des Vergleichens zwecks mobilfunknetzseitiger Authentifizierung des Endgeräts und/oder des Mobilfunkteilnehmer-Identifikations-Moduls, USIMs,
**gekennzeichnet durch**
Nutzen von seitens des mobilen Endgerätes und/oder seitens des Mobilfunkteilnehmer-Identifikations-Moduls, USIMs, veränderbar verwalteten Parametern zum Erzeugen der Antwortnachricht (109), und
Überprüfen des Verhaltens der Authentifizierungsfunktionen der Authentifizierung durch Inbeziehungsetzen der veränderbar verwalteten Parameter und des Ergebnisses der Authentifizierung.

2. Verfahren nach Anspruch 1, **dadurch gekennzeichnet, dass** aus der Beziehung zwischen den Parametern zur Erzeugung der Antwortnachricht, RES, AUTS, und/oder dem mitunter als Antwortnachricht vorliegenden Ergebnis des Vergleichs der generierten erwarteten Antwortnachricht, XRES, mit der Antwortnachricht, RES, AUTS, Rückschlüsse über mobilfunknetzseitiges Fehlverhalten in der Authentifizierung ermittelbar sind und ermittelt werden.

3. Verfahren nach Anspruch 1 oder Anspruch 2, **dadurch gekennzeichnet, dass** im Rahmen der Erzeugung der Antwortnachricht, RES, AUTS, das Ergebnis des Vergleichs des generierten erwarteten Authentifizierungskodes, XMAC, mit dem Authentifizierungskode, MAC, des Authentifizierungstokens, AUTN, mit den veränderbar verwalteten Parametern verknüpft wird, vorzugsweise mit wenigstens einer booleschen Verknüpfung, besonders bevorzugt einer Exklusiv-Oder-Verknüpfung.

4. Verfahren nach einem der Ansprüche 1 bis 3, **dadurch gekennzeichnet, dass** die veränderbar verwalteten Parameter in Form eines Vektors erfasst und genutzt werden.

5. Verfahren nach einem der Ansprüche 1 bis 4, **dadurch gekennzeichnet, dass** die veränderbar verwalteten Parameter seitens des mobilen Endgerätes und/oder seitens des Mobilfunkteilnehmer-Identifikations-Moduls, USIMs, des mobilen Endgerätes gespeichert werden.

6. Verfahren nach einem der Ansprüche 1 bis 5, **dadurch gekennzeichnet, dass** mit den veränderbar verwalteten Parametern Verschlüsselungswerte, CK und/oder Datenintegritätswerte, IK, verändert und in Beziehung zu den Parametern gesetzt werden, vorzugsweise um Rückschlüsse über mobilfunknetzseitiges Fehlverhalten in der Verschlüsselung und/oder Datenintegrität zu ermitteln.

7. Mobiles Endgerät zum Betrieb in einem Mobilfunknetz, vorzugsweise einem Mobilfunknetz gemäß einem UMTS-Funknetzstandard, unter Nutzung wenigstens eines Mobilfunkteilnehmer-Identifikations-Moduls, USIM,
**dadurch gekennzeichnet, dass**
dieses zur Ausführung eines Verfahrens nach einem der Ansprüche 1 bis 6 ausgebildet ist.

8. Mobilfunkteilnehmer-Identifikations-Modul, USIM, zum Ermöglichen eines authentifizierenden Zugangs eines mobilen Endgerätes zu einem Mobilfunknetz, vorzugsweise einem Mobilfunknetz gemäß einem UMTS-Funknetzstandard,
**dadurch gekennzeichnet, dass**
dieses zur Ausführung eines Verfahrens nach einem der Ansprüche 1 bis 6 mit einem mobilen Endgerät nach Anspruch 7 ausgebildet ist.

## Claims

1. A method for checking authentication functions of an authentication between a mobile radio network and a mobile terminal that can be operated in the mobile radio network and/or a mobile subscriber identification module, USIM, that allows a mobile terminal that can be operated in the mobile radio network to have an authenticated access to the mobile radio network, comprising the steps executed by the mobile terminal and/or the mobile subscriber identification module, USIM:
receiving (104), within the scope of the authentication, an authentication vector, AV, comprising a random number, RAND, an expected reply message, XRES, codification values, CK, data integrity values, IK, and an authentication token, AUTN, wherein the authentication token comprises a sequence number, SQN, an information parameter, AMF, and an authentication code, MAC,
verifying the authentication token, AUTN, while using the mobile subscriber identification module, USIM,
generating (107) an expected authentication code, XMAC, from a key value, K, stored by the mobile subscriber identification module, USIM, the random number, RAND, the sequence number, SQN, and the information parameter, AMF,
comparing (108) the generated expected authentication code, XMAC, with the authentication code, MAC, of the authentication token, AUTN, and
generating and transmitting (109) at least one reply message, RES, AUTS, to the mobile radio network in dependence on the result of the comparison for the purpose of an authentication of the terminal and/or the mobile subscriber identification module, USIM, in the mobile radio network,
**characterized by**
using parameters that are managed in a modifiable manner by means of the mobile terminal and/or by means of the mobile subscriber identification module, USIM, for generating the reply message (109), and
checking the behaviour of the authentication functions of the authentication by creating a relation between the parameters managed in a modifiable manner and the result of the authentication.

2. A method according to claim 1, **characterized in that** on the base of the relation between the parameters for generating the reply message, RES, AUTS, and/or the result of the comparison of the generated expected reply message, XRES, with the reply message, RES, AUTS, which result is sometimes present as reply message, conclusions with respect to erroneous behaviour of the mobile radio network in the authentication can be drawn and will be drawn.

3. A method according to claim 1 or claim 2, **characterized in that** within the scope of the generation of the reply message, RES, AUTS, the result of the comparison of the generated expected authentication code, XMAC, with the authentication code, MAC, of the authentication token, AUTN, will be linked with the parameters managed in a modifiable way, preferably by means of a Boolean operation, most preferably by means of an exclusive-OR link.

4. A method according to one of the claims 1 to 3, **characterized in that** the parameters managed in a modifiable manner will be gathered and used in form of a vector.

5. A method according to one of the claims 1 to 4, **characterized in that** the parameters managed in a modifiable manner will be stored by the mobile terminal and/or by the mobile subscriber identification module, USIM, of the mobile terminal.

6. A method according to one of the claims 1 to 5, **characterized in that** codification values, CK, and/or data integrity values, IK, will be modified with the parameters managed in a modifiable manner and set in relation to the parameters, preferably for drawing conclusions with respect to erroneous behaviour of the mobile radio network in the codification and/or data integrity.

7. A mobile terminal for being operated in a mobile radio network, preferably a mobile radio network according to a UMTS radio network standard, using at least one mobile subscriber identification module, USIM,
**characterized in that**
this one is configured for carrying out a method according to one of the claims 1 to 6.

8. A mobile subscriber identification module, USIM, for enabling an authenticated access of a mobile terminal to a mobile radio network, preferably a mobile radio network according to a UMTS radio network standard,
**characterized in that**
this one is configured for carrying out a method according to one of the claims 1 to 6 with a mobile terminal according to claim 7.

## Revendications

1. Procédé de vérification de fonctions d'authentification d'une authentification entre un réseau radio mobile et un terminal fonctionnant dans le réseau radio mobile et/ou un module d'indentification d'abonné mobile, USIM, permettant à un terminal mobile fonctionnant dans le réseau radio mobile d'avoir un accès authentifié au réseau radio mobile, comprenant les étapes exécutées par le terminal mobile et/ou par le module d'indentification d'abonné mobile, USIM, de:
recevoir (104), dans le cadre de l'authentification, un vecteur d'authentification, AV, comprenant un nombre aléatoire, RAND, un message de réponse attendu, XRES, des valeurs de cryptage, CK, des valeurs d'intégrité de données, IK, et un jeton d'authentification, AUTN, le jeton d'authentification, AUTN, comprenant un numéro de séquence, SQN, un paramètre d'information, AMF, et un code d'authentification, MAC,
vérifier le jeton d'authentification, AUTN, en utilisant le module d'indentification d'abonné mobile, USIM,
générer (107) un code d'authentification attendu, XMAC, à partir d'une valeur clé, K, stockée par le module d'indentification d'abonné mobile, USIM, du numéro aléatoire, RAND, du numéro de séquence, SQN, et du paramètre d'information, AMF,
comparer (108) le code d'authentification attendu généré, XMAC, avec le code d'authentification, MAC, du jeton d'authentification, AUTN, et
générer et transmettre (109) au moins un message de réponse, RES, AUTS, au réseau radio mobile en fonction du résultat de la comparaison afin d'authentifier le terminal et/ou le module d'indentification d'abonné mobile, USIM, dans le réseau radio mobile,
**caractérisé par**
l'utilisation de paramètres gérés de manière modifiable par le terminal mobile et/ou par le module d'indentification d'abonné mobile, USIM, pour générer le message de réponse (109), et
la vérification du comportement des fonctions d'authentification de l'authentification en mettant les paramètres gérés de manière modifiable et le résultat de l'authentification en corrélation.

2. Procédé selon la revendication 1, **caractérisé en ce que** sur la base de la liaison entre les paramètres pour générer le message de réponse, RES, AUTS, et/ou entre le résultat de la comparaison du message de réponse attendu généré, XRES, avec le message de réponse, RES, AUTS, lequel résultat est parfois présent comme message de réponse, on peut tirer et on tire des conclusions par rapport à un comportement erroné du réseau radio mobile dans l'authentification.

3. Procédé selon la revendication 1 ou la revendication 2, **caractérisé en ce que** dans le cadre de la génération du message de réponse, RES, AUTS, le résultat de la comparaison du code d'authentification attendu généré, XMAC, avec le code d'authentification, MAC, du jeton d'authentification, AUTN, est relié aux paramètres gérés de manière modifiable, de préférence par moyen d'une opération booléenne, de préférence particulière par moyen d'une combinaison OU exclusif.

4. Procédé selon l'une des revendications 1 à 3, **caractérisé en ce que** les paramètres gérés de manière modifiable sont saisis et utilisés en forme d'un vecteur.

5. Procédé selon l'une des revendications 1 à 4, **caractérisé en ce que** les paramètres gérés de manière modifiable sont stockés par le terminal mobile et/ou par le module d'indentification d'abonné mobile, USIM, du terminal mobile.

6. Procédé selon l'une des revendications 1 à 5, **caractérisé en ce que** des valeurs de cryptage, CK, et/ou des valeurs d'intégrité de données, IK, sont modifiées avec les paramètres gérés de manière modifiable et sont mis en corrélation avec les paramètres, de préférence pour tirer des conclusions par rapport à un comportement erroné du réseau radio mobile dans le cryptage et/ou l'intégrité de données.

7. Terminal mobile destiné à fonctionner dans un réseau radio mobile, de préférence dans un réseau radio mobile selon un standard de réseau radio UMTS, en utilisant au moins un module d'indentification d'abonné mobile, USIM,
**caractérisé en ce que**
celui-ci est configuré pour exécuter un procédé selon l'une des revendications 1 à 6.

8. Module d'indentification d'abonné mobile, USIM, destiné à permettre un accès authentifié d'un terminal mobile à un réseau radio mobile, de préférence à un réseau radio mobile selon un standard de réseau radio UMTS,
**caractérisé en ce que**
celui-ci est configuré pour exécuter un procédé selon l'une des revendications 1 à 6 à l'aide d'un terminal mobile selon la revendication 7.
